# EUROPÄISCHE PATENTANMELDUNG

(11) **EP 3 428 503 A1**
(43) Veröffentlichungstag der Anmeldung: **16.01.2019**
(21) Anmeldenummer: 18171454.4
(22) Anmeldetag: 09.05.2018
(51) Int. Cl.: F16L 59/14, B32B 5/18, B32B 1/08, B29C 53/08

(54) **KÜHLMITTELLEITUNG ZUM LEITEN EINES KÜHLMITTELS**

(30) Priorität: 14.07.2017 DE 102017115937
(71) Anmelder: VERITAS AG, 63571 Gelnhausen (DE)
(72) Erfinder: Fink, Hans-Joachim, 61130 Nidderau (DE); Garcia, Fabien, 63683 Ortenberg (DE)
(74) Vertreter: Patentship Patentanwaltsgesellschaft mbH

(57) **Zusammenfassung**

Die vorliegende Erfindung betrifft eine Kühlmittelleitung (100) zum Leiten eines Kühlmittels, mit einer Außenwandung (101), welche ausgebildet ist, die Kühlmittelleitung (100) thermisch zu isolieren, wobei die Außenwandung (101) aus einem thermisch isolierenden Schaumstoffmaterial geformt ist; und einer Innenleitung (107), welche innerhalb der Außenwandung (101) angeordnet ist, und welche einen Leitungsinnenraum (109) der Kühlmittelleitung (100) zum Leiten des Kühlmittels begrenzt.

## Beschreibung

Die vorliegende Erfindung betrifft eine Kühlmittelleitung zum Leiten eines Kühlmittels, insbesondere eine Kühlmittelleitung in einem Fahrzeug zum Leiten eines Kühlmittels.

In einem Fahrzeug wird eine Vielzahl von Kühlmittelleitungen verwendet, um Gase oder Flüssigkeiten zu transportieren. Um einen Verbrennungsmotor eines Kraftfahrzeuges während des Betriebs zu kühlen, werden Kühlmittel in einem Kühlmittelkreislauf verwendet, welche an dem Verbrennungsmotor vorbeigeführt werden, um Wärme von dem Verbrennungsmotor abzuführen. In einem elektrischen betriebenen Motor eines Elektrofahrzeuges werden Batterien in dem Elektrofahrzeug verwendet, um elektrische Energie zu speichern. Durch die Auflade- und Entladevorgänge bei Betrieb des Elektrofahrzeuges kann in den Batterien Wärme entstehen, welche durch ein Kühlmittel in einem Kühlmittelkreislauf abgeführt werden kann. Um zu verhindern, dass Kühlmittel in einer Kühlmittelleitung durch externe Wärme erwärmt wird, ist es von Vorteil die Kühlmittelleitung wirksam thermisch zu isolieren.

In der DE 10 2010 032 898 A1 ist eine Kühlvorrichtung für eine Fahrzeugbatterie mit zumindest einer Kühlmittelleitung offenbart. Für eine gute Wärmeisolierung der Kühlmittelleitung und der Fahrzeugbatterie kann zumindest ein Wärmeisolierungsbauteil vorgesehen sein, welches mit dem Anpresselement verbunden ist und die Isolierung der Flachseite der Batterie bildet.

Es ist die der Erfindung zugrundeliegende Aufgabe, eine Kühlmittelleitung für ein Kraftfahrzeug bereitzustellen, welche vorteilhafte wärmeisolierende Eigenschaften aufweist.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Kühlmittelleitung zum Leiten eines Kühlmittels gelöst, mit einer Außenwandung, welche ausgebildet ist, die Kühlmittelleitung thermisch zu isolieren, wobei die Außenwandung aus einem thermisch isolierenden Schaumstoffmaterial geformt ist; und einer Innenleitung, welche innerhalb der Außenwandung angeordnet ist, und welche einen Leitungsinnenraum der Kühlmittelleitung zum Leiten des Kühlmittels begrenzt.

Dadurch wird beispielsweise der technische Vorteil erreicht, dass eine thermisch wirksam isolierte Kühlmittelleitung bereitgestellt werden kann, wodurch die Erwärmung von durch die Kühlmittelleitung geleitetem Kühlmittel durch externe Wärme reduziert werden kann.

Durch die Integration des thermisch isolierenden Schaumstoffmaterials in die Außenwandung der Kühlmittelleitung kann auf eine nachträglich außen an die Kühlmittelleitung angebrachte thermische Isolierung verzichtet werden. Das Schaumstoffmaterial weist eine Zellenstruktur auf, in welcher Luft eingeschlossen ist, so dass wirksame thermisch isolierende Eigenschaften des Schaumstoffmaterials sichergestellt werden können. Die Zellwände des Schaumstoffmaterials sind dabei insbesondere elastisch, so dass auf das Schaumstoffmaterial wirkende Kräfte durch eine elastische Verformung der Zellwände wirksam aufgenommen werden können.

Dadurch kann Bauraum beim Verlegen der Kühlmittelleitung in dem Fahrzeug eingespart werden, da die Kühlmittelleitung selbst bereits ausreichende thermisch isolierende Eigenschaften aufweist. Zudem reduziert sich dadurch der Montageaufwand und die Montagekosten beim Verbau der Kühlmittelleitung.

Die Kühlmittelleitung gemäß der vorliegenden Offenbarung wird insbesondere in einem Batteriekühlsystem zum Kühlen von Batterien in einem elektrisch betriebenen Fahrzeug eingesetzt, oder wird insbesondere in einem Kühlmittelkreislauf zum Kühlen eines Verbrennungsmotors eines Kraftfahrzeuges eingesetzt. Als Kühlmittel kann insbesondere eine Kühlflüssigkeit, wie Wasser, ein Wasser-Glykol-Gemisch, und/oder Öl eingesetzt werden, damit sichergestellt ist, dass die Kühlflüssigkeit besonders wirksame Wärme abführen kann.

In einer vorteilhaften Ausführungsform ist das Schaumstoffmaterial als ein mechanisch isolierendes Schaumstoffmaterial und/oder als ein akustisch isolierendes Schaumstoffmaterial ausgebildet.

Dadurch wird beispielsweise der technische Vorteil erreicht, dass das thermisch isolierende Schaumstoffmaterial neben den thermisch isolierenden Eigenschaften auch eine wirksame mechanische und/oder akustische Isolierung sicherstellt. Die durch das Schaumstoffmaterial bereitgestellte mechanische Isolierung stellt sicher, dass die Kühlmittelleitung bei mechanischem Kontakt der Kühlmittelleitung mit anderen Bauteilen in dem Fahrzeug nicht beschädigt wird. Die mechanisch isolierenden Eigenschaften des Schaumstoffmaterials können durch die elastische Verformbarkeit des thermisch isolierenden Schaumstoffmaterials sichergestellt werden. Die durch das Schaumstoffmaterial bereitgestellte akustische Isolierung stellt sicher, dass Vibrationen, welche zwischen der Kühlmittelleitung und anderen Bauteilen in dem Fahrzeug auftreten können, reduziert werden.

In einer vorteilhaften Ausführungsform ist die Außenwandung mit der Innenleitung stoffschlüssig, kraftschlüssig und/oder formschlüssig verbunden ist.

Dadurch wird beispielsweise der technische Vorteil erreicht, dass eine wirksame Befestigung zwischen der Außenwandung und der Innenleitung in der Kühlmittelleitung sichergestellt wird.

In einer vorteilhaften Ausführungsform sind die Innenleitung und Außenwandung einstückig innerhalb der Kühlmittelleitung geformt, wobei die Kühlmittelleitung insbesondere als ein Spritzgussformteil oder ein Extrusionsformteil geformt ist.

Dadurch wird beispielsweise der technische Vorteil erreicht, dass durch die einstückige Ausbildung der Kühlmittelleitung eine besonders wirksame Integration der Außenwandung in die Kühlmittelleitung sichergestellt wird. Wenn die Kühlmittelleitung als ein Spritzgussformteil oder ein Extrusionsformteil geformt ist, wird eine besonders vorteilhafte Herstellung der Kühlmittelleitung sichergestellt, da Innenleitung und Außenwandung als ein Bauteil geformt werden.

In einer vorteilhaften Ausführungsform ist die Außenwandung als ein Wickelband ausgebildet, welches auf die Innenleitung aufgewickelt ist, wobei das Wickelband kraftschlüssig, formschlüssig und/oder stoffschlüssig an der Innenleitung anliegt.

Dadurch wird beispielsweise der technische Vorteil erreicht, dass ein als Wickelband ausgebildetes Schaumstoffmaterial eine besonders wirksame Anbringung der Außenwandung auf der Innenleitung sicherstellt. Ein Wickelband kann einfach, z.B. maschinell durch eine Wickelmaschine, auf die Innenleitung bei der Herstellung der Kühlmittelleitung aufgewickelt werden. Hier kann das Wickelband insbesondere als ein flexibles Wickelband ausgebildet sein, welches schon beim Aufwickeln leicht gedehnt werden kann, und dadurch in der Kühlmittelleitung wirksam kraftschlüssig an der Innenleitung anliegt, um eine wirksame mechanische Stabilität der Kühlmittelleitung zu gewährleisten. Während des Herstellungsverfahrens kann das Wickelband ferner stoffschlüssig, z.B. durch Vernetzung oder Verklebung, mit der Innenleitung verbunden werden.

In einer vorteilhaften Ausführungsform umfasst das Schaumstoffmaterial einen Thermoplast, ein Elastomer, ein thermoplastisches Elastomer (TPE) und/oder ein thermoplastisches Elastomer-Vulkanisat (TPE-V), insbesondere EPDM.

Dadurch wird beispielsweise der technische Vorteil erreicht, dass die genannten Kunststoffe besonders wirksame thermisch isolierende Eigenschaften des thermisch isolierenden Schaumstoffmaterials sicherstellen.

In einer vorteilhaften Ausführungsform ist die Innenleitung aus einem Polymer, insbesondere aus einem Thermoplast, Elastomer, thermoplastischem Elastomer (TPE) und/oder thermoplastischen Elastomer-Vulkanisat (TPE-V) geformt.

Dadurch wird beispielsweise der technische Vorteil erreicht, dass die genannten Kunststoffe eine besonders wirksame chemische und mechanische Widerstandsfähigkeit der Innenleitung gegenüber dem durch den Leitungsinnenraum geleiteten Kühlmittel bereitstellen.

In einer vorteilhaften Ausführungsform weist die Innenleitung eine innere Sperrschicht auf, welche ausgebildet ist eine Diffusion des Kühlmittels durch die innere Sperrschicht zu reduzieren, wobei die innere Sperrschicht den Leitungsinnenraum begrenzt, und wobei die innere Sperrschicht insbesondere Fluorkautschuk (FKM), ein thermoplastisches Elastomer (TPE) und/oder ein thermoplastisches Elastomer-Vulkanisat (TPE-V) umfasst.

Dadurch wird beispielsweise der technische Vorteil erreicht, dass die genannten Kunststoffe der Sperrschicht eine Diffusion des Kühlmittels durch die Kühlmittelleitung wirksam reduzieren.

In einer vorteilhaften Ausführungsform weist die Innenleitung zumindest einen Festigkeitsträger aufweist, wobei der Festigkeitsträger insbesondere aromatische oder aliphatische Polyamid-Fasern, Polyoxadiazol-Fasern, Polyester-Fasern, Aramid-Fasern oder Mischungen davon umfasst.

Dadurch wird beispielsweise der technische Vorteil erreicht, dass die genannten Fasern eine hohe Temperatur- und Druckbeständigkeit aufweisen und sich vorteilhaft zu verformbaren Festigkeitsträgern verarbeiten lassen. Aufgrund der vorteilhaften mechanischen und chemischen Eigenschaften können insbesondere meta-Aramid-Fasern in dem inneren und/oder äußeren Festigkeitsträger vorteilhaft verwendet werden.

In einer vorteilhaften Ausführungsform weist die Kühlmittelleitung zumindest eine Zwischenschicht auf, welche jeweils an dem zumindest einen Festigkeitsträger anliegt, und wobei die Zwischenschicht insbesondere Silikonkautschuk umfasst.

Dadurch wird beispielsweise der technische Vorteil erreicht, dass die Zwischenschicht die Fasern des Festigkeitsträgers besonders wirksam vor mechanischen Beanspruchungen, wie z.B. Abrieb schützt.

In einer vorteilhaften Ausführungsform weist die Innenleitung an einer Außenseite eine Außenschicht auf, wobei die Außenwandung mit der Außenschicht stoffschlüssig verbunden ist.

Dadurch wird beispielsweise der technische Vorteil erreicht, dass durch die stoffschlüssige Verbindung zwischen der Außenwandung und der Außenschicht der Innenleitung eine besonders wirksame Befestigung der Außenwandung innerhalb der Kühlmittelleitung sichergestellt werden kann.

In einer vorteilhaften Ausführungsform ist die Kühlmittelleitung als eine formstabile Formleitung ausgebildet, wobei die formstabile Formleitung insbesondere als eine zumindest abschnittsweise zweidimensional oder dreidimensional gekrümmte formstabile Formleitung ausgebildet ist.

Dadurch wird beispielsweise der technische Vorteil erreicht, dass eine als Formleitung ausgebildete Kühlmittelleitung besonders vorteilhaft hergestellt werden kann, und an die räumlichen Beschränkungen in dem entsprechenden Bauraum durch eine spezifische Formgebung angepasst werden kann. Hierbei kann die Formstabilität der formstabilen Formleitung beispielweise durch einen Vulkanisationsvorgang sichergestellt werden, so dass die formstabile Formleitung nach der Vulkanisierung bei einer mechanischen Verformung wieder in Ihren Ausgangszustand zurückkehrt. Die zumindest abschnittsweise zweidimensional oder dreidimensional gekrümmte formstabile Formleitung weist insbesondere zumindest eine Krümmung oder zumindest eine Biegung auf.

In einer vorteilhaften Ausführungsform ist die Kühlmittelleitung als eine Fahrzeugkühlflüssigkeitsleitung geformt, welche ausgebildet ist Kühlflüssigkeit in einem Fahrzeug zu leiten.

Dadurch wird beispielsweise der technische Vorteil erreicht, dass die Kühlmittelleitung in dem Fahrzeug eine besonders vorteilhafte Kühlung von Wärme-erzeugenden Bauteilen sicherstellt.

Gemäß einem zweiten Aspekt der Erfindung wird die Aufgabe durch ein Verfahren zum Herstellen einer Kühlmittelleitung zum Leiten eines Kühlmittels gelöst, umfassend die folgenden Schritte, Bereitstellen einer Innenleitung, welche einen Leitungsinnenraum der Kühlmittelleitung zum Leiten des Kühlmittels begrenzt; und Anordnen einer Außenwandung auf der Innenleitung, wobei die Außenwandung aus einem thermisch isolierenden Schaumstoffmaterial geformt ist, und wobei die Innenleitung innerhalb der Außenwandung angeordnet ist.

Dadurch wird beispielsweise der technische Vorteil erreicht, dass eine besonders wirksame Herstellung einer Kühlmittelleitung sichergestellt wird.

In einer vorteilhaften Ausführungsform umfasst das Anordnen der Außenwandung, das Aufwickeln der Außenwandung auf die Innenleitung, das Aufextrudieren der Außenwandung auf die Innenleitung, das Co-extrudieren der Außenwandung mit der Innenleitung, oder das Spritzgießen der Außenwandung mit der Innenleitung.

Dadurch wird beispielsweise der technische Vorteil erreicht, dass eine besonders wirksame Anordnung der Außenwandung auf der Innenwandung sichergestellt werden kann.

Ausführungsbeispiele der Erfindung sind in den Zeichnungen dargestellt und werden im Folgenden näher beschrieben.

Es zeigen:
- Fig. 1: eine perspektivische Ansicht einer Kühlmittelleitung;
- Fig. 2: eine perspektivische Ansicht einer Kühlmittelleitung mit einer Außenwandung in einer geraden und in einer gebogenen Ansicht; und
- Fig. 3: ein Verfahren zum Herstellen einer Kühlmittelleitung.

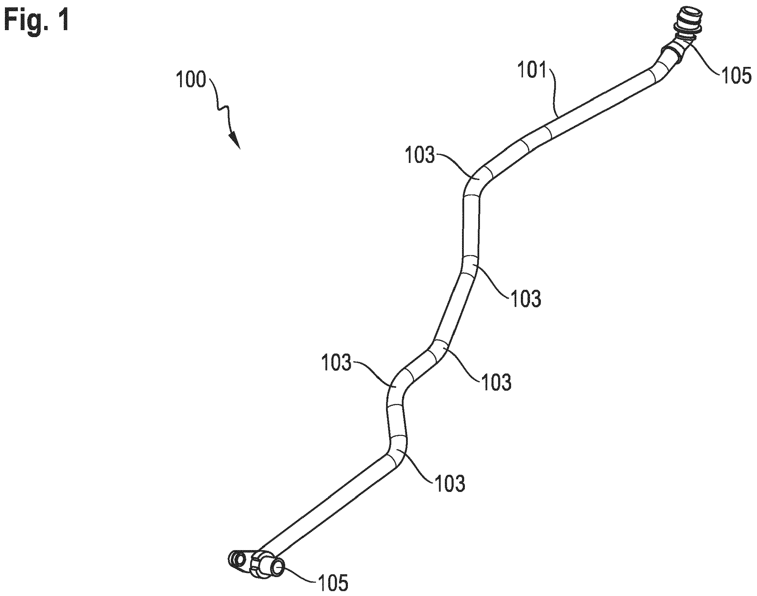

Fig. 1 zeigt eine perspektivische Ansicht einer Kühlmittelleitung 100. Der Kühlmittelleitung 100 umfasst insbesondere eine Kühlmittelleitung 100 für Fahrzeuge, insbesondere für elektrisch betriebene Fahrzeuge oder für Kraftfahrzeuge mit einem Verbrennungsmotor.

Elektrisch betriebene Fahrzeuge weisen Batterien auf, welche ausgebildet sind, elektrische Energie zu speichern, so dass die gespeicherte elektrische Energie bei Bedarf aus den Batterien abgerufen werden kann, um das elektrische betriebene Fahrzeug anzutreiben. Um eine gleichmäßige Betriebstemperatur der Batterien innerhalb des elektrisch betriebenen Fahrzeugs sicherzustellen, werden die Batterien durch Kühlmittel gekühlt, welches den Batterien durch die Kühlmittelleitung 100 zugeführt werden kann. Um einen nicht gewünschten Wärmeaustausch des durch die Kühlmittelleitung 100 geführten Kühlmittels mit der Umgebung zu vermeiden, ist eine wirksame thermische Isolierung der Kühlmittelleitung 100 notwendig. Dadurch wird eine wirksame Kühlung der Batterien durch die Kühlmittelleitung 100 sichergestellt.

Kraftfahrzeuge mit Verbrennungsmotoren weisen ebenfalls eine Kühlmittelleitung 100 auf. Hierbei wird die Kühlmittelleitung 100 in einem Kühlmittelkreislauf des Kraftfahrzeuges verwendet, wobei hierbei durch die Kühlmittelleitung 100 geleitetes Kühlmittel dem Verbrennungsmotor zugeführt wird, um den Verbrennungsmotor zu kühlen und Wärme von dem Verbrennungsmotor abzuführen. Um einen nicht gewünschten Wärmeaustausch des durch die Kühlmittelleitung 100 geführten Kühlmittels mit der Umgebung zu vermeiden ist auch in Kraftfahrzeugen eine wirksame thermische Isolierung der Kühlmittelleitung 100 notwendig. Dadurch wird eine wirksame Kühlung des Verbrennungsmotors durch die Kühlmittelleitung 100 sichergestellt.

Als Kühlmittel kann insbesondere eine Kühlflüssigkeit, wie Wasser, ein Wasser-Glykol-Gemisch, und/oder Öl eingesetzt werden, damit sichergestellt ist, dass die Kühlflüssigkeit besonders wirksame Wärme abführen kann.

Die in der Fig. 1 dargestellte Kühlmittelleitung 100 weist eine Außenwandung 101 auf, welche ausgebildet ist, die Kühlmittelleitung 100 wirksam thermisch zu isolieren. Die Außenwandung 101 ist hierzu aus einem thermisch isolierenden Schaumstoffmaterial geformt. Ein Schaumstoffmaterial weist eine Zellenstruktur auf, in welcher Luft eingeschlossen ist, so dass die wirksamen thermisch isolierenden Eigenschaften des Schaumstoffmaterials sichergestellt werden können. Die Zellwände des Schaumstoffmaterials sind dabei insbesondere elastisch, so dass auf das Schaumstoffmaterial wirkende Kräfte durch eine elastische Verformung der Zellwände wirksam aufgenommen werden können.

Durch die elastische Verformbarkeit des thermisch isolierenden Schaumstoffmaterials kann neben den thermisch isolierenden Eigenschaften des Schaumstoffmaterials auch noch sichergestellt werden, dass das Schaumstoffmaterial als ein mechanisch isolierendes Schaumstoffmaterial ausgebildet ist. Beim Einbau der Kühlmittelleitung 100 in ein Fahrzeug kann dadurch sichergestellt werden, dass beim Kontakt der Außenwandung 101 der Kühlmittelleitung 100 mit anderen Bauteilen in dem Fahrzeug auf die Außenwandung 101 wirkende mechanische Belastungen besonders wirksam durch die Außenwandung 101 aufgenommen werden können.

Das thermisch isolierende Schaumstoffmaterial kann insbesondere einen Thermoplast, ein Elastomer, ein thermoplastisches Elastomer (TPE) und/oder ein thermoplastisches Elastomer-Vulkanisat (TPE-V), insbesondere EPDM, umfassen.

Zudem stellt das Schaumstoffmaterial der Außenwandung 101 eine akustische Isolierung der Kühlmittelleitung 100 bereit, wodurch Vibrationen, welche zwischen der Kühlmittelleitung 100 und anderen Bauteilen in dem Fahrzeug auftreten können, reduziert werden können.

Somit stellt die aus einem thermisch isolierenden Schaumstoffmaterial gebildete Außenwandung 101 der Kühlmittelleitung 100 besonders vorteilhafte thermisch, mechanisch und/oder akustisch isolierende Eigenschaften der Kühlmittelleitung 100 sicher.

Durch die Integration der aus einem thermisch isolierenden Schaumstoffmaterial gebildeten Außenwandung 101 in der Kühlmittelleitung 100 kann auf eine separate externe Isolierung in der Kühlmittelleitung 100 verzichtet werden. Dadurch kann Bauraum beim Verlegen der Kühlmittelleitung 100 in dem Fahrzeug eingespart werden, da die Kühlmittelleitung 100 selbst bereits ausreichende thermisch isolierende Eigenschaften aufweist. Zudem reduziert sich dadurch der Montageaufwand und die Montagekosten beim Verbau der Kühlmittelleitung 100.

Der Kühlmittelleitung 100 ist hierbei entweder als eine elastisch verformbare, insbesondere biegbare Kühlmittelleitung oder als eine formstabile Formleitung ausgebildet, welche insbesondere einen zweidimensional oder dreidimensional gekrümmten Verlauf aufweist, wodurch die Formleitung besonders vorteilhaft in einer beengten Bauraumsituation eines Motorraums eines Kraftfahrzeuges verbaut werden kann.

Eine als formstabile Formleitung ausgebildete Kühlmittelleitung 100 kann besonders vorteilhaft hergestellt werden, und an die räumlichen Beschränkungen in dem entsprechenden Bauraum innerhalb des Fahrzeuges durch eine spezifische Formgebung angepasst werden. Hierbei kann die Formstabilität der formstabilen Formleitung beispielweise durch einen Vulkanisationsvorgang sichergestellt werden, so dass die formstabile Formleitung nach der Vulkanisierung bei einer mechanischen Verformung wieder in Ihren Ausgangszustand zurückkehrt. Die zumindest abschnittsweise zweidimensional oder dreidimensional gekrümmte formstabile Formleitung weist insbesondere zumindest eine Krümmung 103 oder zumindest eine Biegung 103 auf.

Bei der Herstellung einer als formstabile Formleitung ausgebildeten Kühlmittelleitung 100 wird ein Leitungsrohling in die gewünschte Form der Formleitung gebogen. Anschließend wird der Leitungsrohling, z.B. durch Vulkanisation, in der gewünschten Form fixiert, so dass eine formstabile Formleitung erhalten wird. Die formstabile Formleitung weist eine gewisse Flexibilität auf, jedoch kehrt die Formleitung bei einem Verbiegen oder Verdrehen der Formleitung erneut in die ursprüngliche Form zurück.

An den beiden Enden der in Fig. 1 dargestellten Kühlmittelleitung 100 sind Anschlüsse 105 angeordnet, welche ausgebildet sind, die Kühlmittelleitung 100 mit anderen fluidtechnischen Leitungen des Kühlsystems zu verbinden.

Der Kühlmittelleitung 100 weist eine in Fig. 1 nicht dargestellte Innenleitung auf, welche einen in Fig. 1 nicht dargestellten Leistungsinnenraum der Kühlmittelleitung 100 begrenzt. Der Leitungsinnenraum 109 ist ausgebildet Kühlmittel durch die Kühlmittelleitung 100 zu leiten.

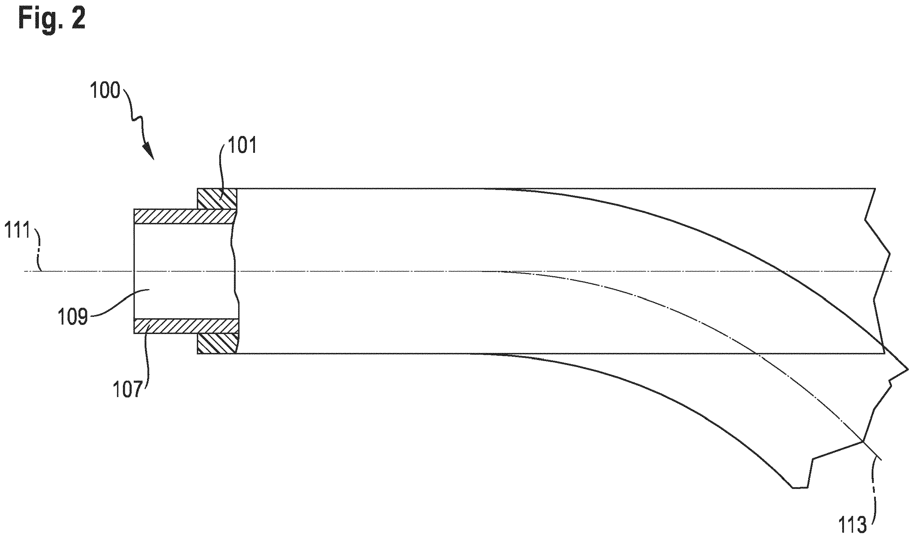

Fig. 2 zeigt eine perspektivische Ansicht einer Kühlmittelleitung 100 mit einer Außenwandung 101 in einer geraden und in einer gebogenen Ansicht.

Die Kühlmittelleitung 100 weist eine Außenwandung 101 aus einem thermisch isolierenden Schaumstoffmaterial auf, und weist eine Innenleitung 107 auf, welche einen Leitungsinnenraum 109 begrenzt, wobei der Leitungsinnenraum 109 der Kühlmittelleitung 100 ausgebildet ist, Kühlmittel zu leiten.

In der in Fig. 2 dargestellten geraden Form der Kühlmittelleitung 100 erstreckt sich die Kühlmitteleitung 100 gerade entlang einer Längsachse 111. Anschließend wird die Kühlmittelleitung 100 gebogen und die Kühlmittelleitung 100 erstreckt sich in einer gebogenen Form entlang der Krümmungsachse 113. Um die Formgebung der Kühlmittelleitung 100 in der gebogenen Form zu fixieren kann ein Vulkanisationsvorgang durchgeführt werden, durch den die Kühlmittelleitung 100 als eine formstabile Formleitung ausgebildet ist. Nach dem Ende des Vulkanisationsvorgangs behält die formstabile Formleitung ihre Form bei. Eine formstabile Formleitung kann hierbei insbesondere in geringem Maße elastisch verformt werden. Nach der elastischen Verformung der formstabilen Formleitung verformt sich die formstabile Formleitung wieder in die ursprüngliche, gebogene Form der formstabilen Formleitung zurück.

Die Außenwandung 101 kann mit der Innenleitung 107 stoffschlüssig, kraftschlüssig und/oder formschlüssig verbunden sein. Die Außenwandung 101 kann auch als ein Wickelband aus thermisch isolierendem Schaumstoff ausgebildet sein, welcher auf die Innenleitung 107 der Kühlmittelleitung 100 aufgewickelt ist, wobei hierbei das Wickelband insbesondere kraftschlüssig, formschlüssig und/oder stoffschlüssig an der Innenleitung 107 anliegt.

Insbesondere kann die Innenleitung 107 und die Außenwandung 101 einstückig innerhalb der Kühlmittelleitung 100 geformt sein, wobei die Kühlmittelleitung 100 hierbei insbesondere als ein Spritzgussformteil oder ein Extrusionsformteil geformt ist.

Die Innenleitung 107 ist insbesondere aus einem Polymer, insbesondere aus einem Thermoplast, Elastomer, thermoplastischem Elastomer (TPE) und/oder thermoplastischen Elastomer-Vulkanisat (TPE-V) geformt.

Auch wenn dies in Fig. 2 nicht dargestellt ist, kann die Innenleitung 107 der Kühlmittelleitung 100 insbesondere zumindest einen Festigkeitsträger aufweisen, wobei der Festigkeitsträger insbesondere aromatische oder aliphatische Polyamid-Fasern, Polyoxadiazol-Fasern, Polyester-Fasern, Aramid-Fasern oder Mischungen davon umfasst.

Die Innenleitung 107 der Kühlmittelleitung 100 kann ferner insbesondere eine in Fig. 2 nicht dargestellte innere Sperrschicht aufweisen, welche ausgebildet ist eine Diffusion des Kühlmittels durch die innere Sperrschicht zu reduzieren, wobei die innere Sperrschicht den Leitungsinnenraum 109 begrenzt, und wobei die innere Sperrschicht insbesondere Fluorkautschuk (FKM), ein thermoplastisches Elastomer (TPE) und/oder ein thermoplastisches Elastomer-Vulkanisat (TPE-V) umfasst.

Die Innenleitung 107 der Kühlmittelleitung 100 kann insbesondere zumindest eine Zwischenschicht aufweisen, welche jeweils an dem zumindest einen Festigkeitsträger anliegt, wobei die Zwischenschicht insbesondere Silikonkautschuk umfasst.

Die Innenleitung 107 der Kühlmittelleitung 100 kann ferner insbesondere eine Außenschicht aufweisen, wobei die Außenschicht insbesondere chloriertes Polyethylen, chlorsulfoniertes Polyethylen, Acrylnitril-butadien, Polyvinylchlorid, Chloropren, Epichlorhydrin, Epichlorhydrin-Ethylenoxid, Ethylen-Propylendien oder Mischungen davon umfasst. Hierbei kann eine Außenseite der Außenschicht der Innenleitung 107 mit der Außenwandung 101 verbunden, insbesondere stoffschlüssig verbunden sein.

Die Kühlmittelleitung 100 ist hierbei insbesondere als eine Fahrzeugkühlflüssigkeitsleitung geformt, welche ausgebildet ist, Kühlflüssigkeit in einem Fahrzeug zu leiten. Bei herkömmlich verwendeten Kühlmittelleitungen 100 wird Kühlmittel oftmals mit einer geringen Temperatur geleitet, so dass eine wirksame thermische Isolierung der Kühlmittelleitung 100 durch die aus thermisch isolierendem Schaumstoff bestehende Außenwandung 101 notwendig sein kann, damit es zu keinem nicht gewünschten Wärmeaustausch zwischen dem Kühlmittel und der Umgebung der Kühlmittelleitung 100 kommt.

Dadurch wird der technische Vorteil erreicht, dass keine nachträglich separate Isolierung auf die Kühlmittelleitung 100 aufgebracht werden muss, wodurch beim Verlegen der Kühlmittelleitung 100 in einem Fahrzeug Kosten und Bauraum eingespart werden können.

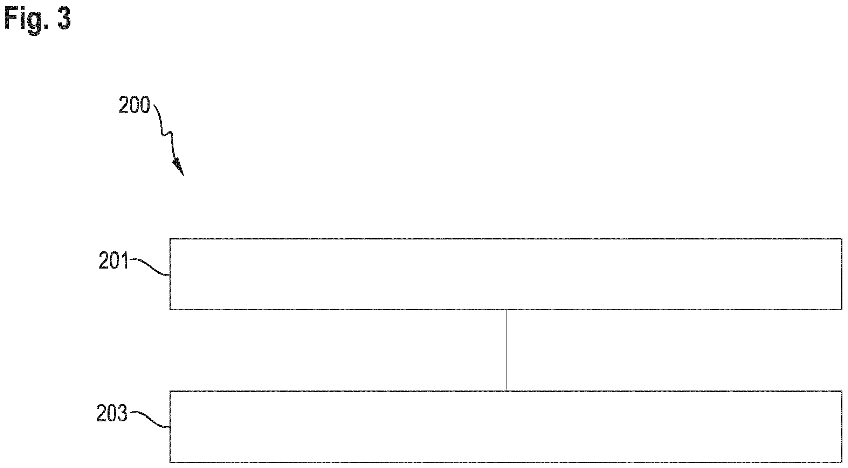

Fig. 3 zeigt ein Verfahren zum Herstellen einer Kühlmittelleitung.

Das Verfahren 200 umfasst als ersten Schritt, das Bereitstellen 201 einer Innenleitung 107, welche einen Leitungsinnenraum 109 der Kühlmittelleitung 100 zum Leiten des Kühlmittels begrenzt. Das Verfahren umfasst als zweiten Schritt, das Anordnen 203 einer Außenwandung 101 auf der Innenleitung 107, wobei die Außenwandung 101 aus einem thermisch isolierenden Schaumstoffmaterial geformt ist, und wobei die Innenleitung 107 innerhalb der Außenwandung 101 angeordnet ist.

Das Anordnen 203 der Außenwandung 101 umfasst hierbei insbesondere das Aufwickeln der Außenwandung 101 auf die Innenleitung 107, das Aufextrudieren der Außenwandung 101 auf die Innenleitung 107, das Co-extrudieren der Außenwandung 101 mit der Innenleitung 107, oder das Spritzgießen der Außenwandung 101 mit der Innenleitung 107.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kühlmittelleitung
- 101: Außenwandung
- 103: Krümmungen, Biegungen
- 105: Anschluss
- 107: Innenleitung
- 109: Leitungsinnenraum
- 111: Längsachse
- 113: Krümmungsachse
- 200: Verfahren zum Herstellen einer Kühlmittelleitung
- 201: Erster Verfahrensschritt: Bereitstellen einer Innenleitung
- 203: Zweiter Verfahrensschritt: Anordnen einer Außenwandung auf der Innenleitung

## Patentansprüche

1. Kühlmittelleitung (100) zum Leiten eines Kühlmittels, mit:
einer Außenwandung (101), welche ausgebildet ist, die Kühlmittelleitung (100) thermisch zu isolieren, wobei die Außenwandung (101) aus einem thermisch isolierenden Schaumstoffmaterial geformt ist; und
einer Innenleitung (107), welche innerhalb der Außenwandung (101) angeordnet ist, und welche einen Leitungsinnenraum (109) der Kühlmittelleitung (100) zum Leiten des Kühlmittels begrenzt.

2. Kühlmittelleitung (100) nach Anspruch 1, wobei das Schaumstoffmaterial als ein mechanisch isolierendes Schaumstoffmaterial und/oder als ein akustisch isolierendes Schaumstoffmaterial ausgebildet ist.

3. Kühlmittelleitung (100) nach Anspruch 1 oder 2, wobei die Außenwandung (101) mit der Innenleitung (107) stoffschlüssig, kraftschlüssig und/oder formschlüssig verbunden ist.

4. Kühlmittelleitung (100) nach einem der vorangehenden Ansprüche, wobei die Innenleitung (107) und Außenwandung (101) einstückig innerhalb der Kühlmittelleitung (100) geformt sind, und wobei die Kühlmittelleitung (100) insbesondere als ein Spritzgussformteil oder ein Extrusionsformteil geformt ist.

5. Kühlmittelleitung (100) nach einem der vorangehenden Ansprüche 1 bis 3, wobei die Außenwandung (101) als ein Wickelband ausgebildet ist, welches auf die Innenleitung (107) aufgewickelt ist, wobei das Wickelband kraftschlüssig, formschlüssig und/oder stoffschlüssig an der Innenleitung (107) anliegt.

6. Kühlmittelleitung (100) nach einem der vorangehenden Ansprüche, wobei das Schaumstoffmaterial einen Thermoplast, ein Elastomer, ein thermoplastisches Elastomer (TPE) und/oder ein thermoplastisches Elastomer-Vulkanisat (TPE-V), insbesondere EPDM umfasst.

7. Kühlmittelleitung (100) nach einem der vorangehenden Ansprüche, wobei die Innenleitung (107) aus einem Polymer, insbesondere aus einem Thermoplast, Elastomer, thermoplastischem Elastomer (TPE) und/oder thermoplastischen Elastomer-Vulkanisat (TPE-V) geformt ist.

8. Kühlmittelleitung (100) nach einem der vorangehenden Ansprüche, wobei die Innenleitung (107) eine innere Sperrschicht aufweist, welche ausgebildet ist eine Diffusion des Kühlmittels durch die innere Sperrschicht zu reduzieren, wobei die innere Sperrschicht den Leitungsinnenraum (109) begrenzt, und wobei die innere Sperrschicht insbesondere Fluorkautschuk (FKM), ein thermoplastisches Elastomer (TPE) und/oder ein thermoplastisches Elastomer-Vulkanisat (TPE-V) umfasst.

9. Kühlmittelleitung (100) nach einem der vorangehenden Ansprüche, wobei die Innenleitung (107) zumindest einen Festigkeitsträger aufweist, wobei der Festigkeitsträger insbesondere aromatische oder aliphatische Polyamid-Fasern, Polyoxadiazol-Fasern, Polyester-Fasern, Aramid-Fasern oder Mischungen davon umfasst.

10. Kühlmittelleitung (100) nach Anspruch 9, wobei die Kühlmittelleitung (100) zumindest eine Zwischenschicht aufweist, welche jeweils an dem zumindest einen Festigkeitsträger anliegt, und wobei die Zwischenschicht insbesondere Silikonkautschuk umfasst.

11. Kühlmittelleitung (100) nach einem der vorangehenden Ansprüche, wobei die Innenleitung (107) an einer Außenseite eine Außenschicht aufweist, wobei die Außenwandung (101) mit der Außenschicht stoffschlüssig verbunden ist.

12. Kühlmittelleitung (100) nach einem der vorangehenden Ansprüche, wobei die Kühlmittelleitung (100) als eine formstabile Formleitung ausgebildet ist, und wobei die formstabile Formleitung insbesondere als eine zumindest abschnittsweise zweidimensional oder dreidimensional gekrümmte formstabile Formleitung ausgebildet ist.

13. Kühlmittelleitung (100) nach einem der vorangehenden Ansprüche, wobei die Kühlmittelleitung (100) als eine Fahrzeugkühlflüssigkeitsleitung geformt ist, welche ausgebildet ist Kühlflüssigkeit in einem Fahrzeug zu leiten.

14. Verfahren (200) zum Herstellen einer Kühlmittelleitung (100) zum Leiten eines Kühlmittels, umfassend die folgenden Schritte:
Bereitstellen (201) einer Innenleitung (107), welche einen Leitungsinnenraum (109) der Kühlmittelleitung (100) zum Leiten des Kühlmittels begrenzt; und
Anordnen (203) einer Außenwandung (101) auf der Innenleitung (107), wobei die Außenwandung (101) aus einem thermisch isolierenden Schaumstoffmaterial geformt ist, und wobei die Innenleitung (107) innerhalb der Außenwandung (101) angeordnet ist.

15. Verfahren (200) nach Anspruch 14, wobei das Anordnen (203) der Außenwandung (101), das Aufwickeln der Außenwandung (101) auf die Innenleitung (107), das Aufextrudieren der Außenwandung (101) auf die Innenleitung (107), das Co-extrudieren der Außenwandung (101) mit der Innenleitung (107), oder das Spritzgießen der Außenwandung (101) mit der Innenleitung (107) umfasst.
